**Europäisches Patentamt**

**European Patent Office**

**Office européen des brevets**

(19)

(11) Numéro de publication : **0 487 372 A1**

# (12) DEMANDE DE BREVET EUROPEEN

(21) Numéro de dépôt : **91402929.3**

(22) Date de dépôt : **31.10.91**

(51) Int. Cl.⁵ : **F02F 7/00, F02B 19/16, F02B 51/02**

---

(30) Priorité : **19.11.90 FR 9014372**

(43) Date de publication de la demande :
**27.05.92 Bulletin 92/22**

(84) Etats contractants désignés :
**DE GB IT**

(71) Demandeur : **AUTOMOBILES PEUGEOT**
**75, avenue de la Grande Armée**
**F-75116 Paris (FR)**
(71) Demandeur : **AUTOMOBILES CITROEN**
**62 Boulevard Victor-Hugo**
**F-92200 Neuilly-sur-Seine (FR)**

(72) Inventeur : **Le Borgne, Gilles**
**14, Résidence le Clos de Verrières**
**F-91370 Verrieres le Buisson (FR)**
Inventeur : **Busson, Jacques**
**59, Rue A. Pajeaud**
**F-92160 Anthony (FR)**

(74) Mandataire : **Beauchamps, Georges et al**
**Cabinet Z.Weinstein 20, avenue de Friedland**
**F-75008 Paris (FR)**

---

(54) **Procédé de réalisation d'un dépôt catalytique par jet de plasma dans une chambre de combustion d'un moteur à explosion.**

(57) La présente invention concerne un procédé de réalisation d'un dépôt catalytique dans notamment la chambre de combustion d'un moteur à combustion interne.

Ce procédé consiste à déposer dans une préchambre de combustion (1) un matériau céramique (10) de porosité ouverte comprise entre environ 5 et 20%, projeté sur la paroi de la préchambre par un jet de plasma (3), et un matériau à effet catalytique déposé par voie liquide, sur le matériau céramique (10) et qui imprégnera les pores ouverts du support en céramique.

Ce procédé permet la dépollution à la source des gaz d'échappement émis par les moteurs de véhicules automobiles quelconques.

Fig. 1

EP 0 487 372 A1

La présente invention se rapporte à un procédé pour effectuer un dépôt catalytique dans notamment la chambre de combustion d'un moteur à combustion interne.

Plus particulièrement, l'invention concerne un procédé de dépôt d'un revêtement catalytique essentiellement constitué de céramique servant de support pour un matériau catalytique actif vis-à-vis de la combustion des hydrocarbures.

Il est bien connu de combattre la pollution provoquée par les gaz d'échappement des moteurs à combustion interne à l'aide de pots catalytiques pour le traitement desdits gaz.

Or, il serait intéressant de pouvoir placer des éléments catalytiques directement dans la chambre ou la préchambre de combustion afin d'obtenir ainsi une dépollution à la source.

A cet égard, on a déjà proposé d'effectuer sur les différentes pièces associées à la chambre de combustion d'un moteur, un dépôt catalytique essentiellement constitué d'une couche de zircone revêtue d'un catalyseur actif vis-à-vis des hydrocarbures imbrûlés.

Toutefois, ce dépôt catalytique connu était loin d'être satisfaisant, tant sur le plan de l'efficacité contre l'émission des gaz imbrûlés, que sur celui de la bonne tenue mécanique du catalyseur sur la zircone, et de la zircone sur la pièce à revêtir.

Aussi, la présente invention a pour but de remédier à ces inconvénients en proposant un procédé pour effectuer le dépôt d'un revêtement catalytique sur les pièces associées à une chambre de combustion, qui confère au revêtement toutes les qualités désirables d'action contre des imbrûlés et de bonne tenue mécanique, même à la longue, et qui en outre, est d'une mise en oeuvre relativement simple et peu coûteuse.

A cet effet, l'invention a pour objet un procédé de réalisation d'un dépôt catalytique dans notamment la chambre de combustion d'un moteur à combustion interne, et du type consistant à déposer dans ladite chambre un revêtement catalytique essentiellement constitué de céramique comportant de l'oxyde de zirconium stabilisé par de l'oxyde d'yttrium et servant de support pour un matériau catalytique, actif vis-à-vis de la combustion des hydrocarbures dans ladite chambre de combustion, caractérisé en ce qu'on dépose la céramique, à l'aide d'au moins un jet de plasma, pour qu'elle forme dans la chambre de combustion un revêtement d'épaisseur égale ou inférieure à 1 mm et possédant une porosité ouverte comprise entre environ 5 et 20%, et on dépose par voie liquide ledit matériau catalytique de manière que les pores ouverts dudit revêtement céramique reçoivent ledit matériau catalytique qui est déposé par voie liquide sur le revêtement céramique.

Suivant une autre caractéristique de ce procédé, le dépôt du matériau catalytique par voie liquide dans les pores ouverts de la céramique comporte les étapes suivantes.

Imprégnation de la céramique par une solution aqueuse ou alcoolique contenant un précurseur du matériau catalytique.

Séchage et traitement thermique sous atmosphère réductrice pour transformer le précurseur du matériau catalytique en produit actif.

Suivant un mode de réalisation particulier, le procédé selon cette invention est caractérisé en ce qu'avant d'effectuer le dépôt précité de céramique, on réalise le dépôt par jet de plasma d'une sous-couche de composé intermétallique tel que Ni-Al ou M-Cr-Al-Y pour assurer un accord dilatométrique entre le revêtement céramique et la paroi de la chambre de combustion.

Le procédé selon cette invention est encore caractérisé en ce que le précurseur précité actif vis-à-vis de la combustion des hydrocarbures est un matériau noble tel que le platine, le palladium, le rhodium ou analogue, ou un matériau non noble choisi parmi des sels métalliques tels que des nitrates, des oxychlorures, ou des composés organométalliques tels que des acétates, des acétylacétonates, ou analogues.

Selon encore une autre caractéristique, le revêtement céramique est réalisé par un dépôt de zircone, d'alumine, d'oxyde de chrome ou de cérine.

Suivant une autre caractéristique de cette invention, on prévoit un revêtement céramique comportant de la zircone stabilisée par 7% d'oxyde d'yttrium.

Le procédé selon cette invention est encore caractérisé en ce que le dépôt du précurseur du matériau catalytique est effectué par échange ionique par substitution cationique ou anionique selon le précurseur.

Selon une autre caractéristique, l'épaisseur dudit revêtement céramique est d'environ 0,4 mm et l'épaisseur de la sous-couche du composé intermétallique est d'environ 0,2 mm.

On précisera encore que le procédé est applicable à toutes les pièces de la chambre de combustion d'un moteur à combustion interne tels que notamment la ou les culasses, les soupapes, les pistons, à l'exception de la chemise.

Mais d'autres caractéristiques et avantages de l'invention apparaîtront mieux dans la description détaillée qui suit, et se réfère aux dessins annexés, donnés uniquement à titre d'exemple, et dans lesquels.

La figure 1 est une vue schématique d'une installation permettant la mise en oeuvre du procédé selon cette invention.

La figure 2 est une vue partielle schématique et en coupe, d'une pièce en acier comportant un revêtement catalytique réalisé selon ce procédé.

La figure 3 est une vue agrandie en coupe d'une préchambre de combustion comportant ledit revêtement catalytique.

La figure 4 est une vue en plan de dessus de la préchambre suivant la flèche IV de la figure 3.

La figure 5 est un graphique illustrant la concentration en hydrocarbures imbrûlés en fonction du dioxyde d'azote et ce pour une préchambre de combustion classique ainsi qu'une préchambre comportant un dépôt catalytique selon cette invention.

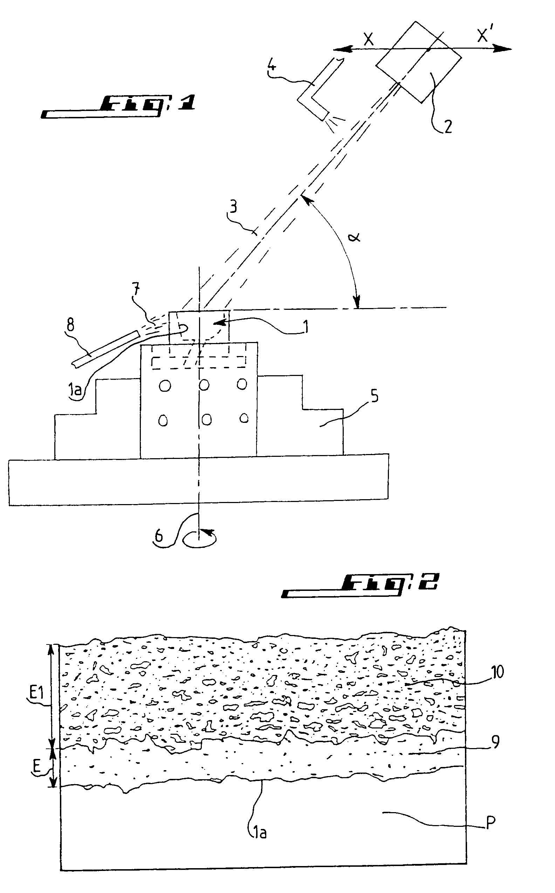

En se reportant à la figure 1, on voit qu'une installation permettant la réalisation d'un revêtement céramique, sur une pièce quelconque telle que par exemple la préchambre de combustion 1 d'un moteur à combustion interne comprend une torche à plasma 2, pouvant se déplacer selon un axe horizontal XX', produisant un jet de plasma 3 comprenant un gaz tel que l'argon, l'azote ou des mélanges de gaz, tels que argon-azote, argon-azote-hydrogène ou argon-azote-hélium. On utilise de préférence l'hydrogène ou l'hélium car ils permettent d'améliorer le transfert de chaleur entre le plasma des particules de céramique injecté sous pression, dans le jet de plasma 3, par un système 4 d'injection de particules de céramiques infondues.

La température du jet de plasma 3 peut atteindre 10000°C, et les particules de céramique fondent au contact de ce jet de plasma 3, et sont projetées sur la partie de la pièce ou de la préchambre de combustion 1.

Le jet de plasma 3 forme un angle $\alpha$, sensiblement égal à 45° avec le plan horizontal, constituant la partie supérieure de la préchambre 1 qui repose sur un mandrin récepteur 5, pouvant pivoter autour d'un axe vertical 6 et, est refroidi au moyen d'un jet de refroidissement 7, produit par un moyen approprié montré schématiquement en 8, le refroidissement s'exerçant pendant le fonctionnement de la torche à plasma 2.

Différents paramètres de tir doivent être optimisés afin d'obtenir un dépôt céramique homogène et non fissuré sur la surface interne de la préchambre 1. Ces paramètres sont, par exemple liés à la nature du matériau projeté, à la puissance de la torche 2, à la pression d'injection des particules de céramique par le système 4 dans le jet de plasma 3, au débit de gaz plasmagène, à la distance de tir du jet de plasma 3, ou au débit de la poudre de céramique.

Ces paramètres peuvent également dépendre de la géométrie de la pièce à revêtir, de la préparation de surface de cette pièce, de son refroidissement pendant le tir, de l'angle de tir ou de la vitesse relative de la pièce à revêtir par rapport à la torche à plasma 2. La rotation du mandrin récepteur 5, autour de l'axe vertical 6, permet un dépôt uniforme du matériau céramique sur la surface interne 1a de la préchambre de combustion 1.

Le matériau céramique utilisé et projeté, est choisi parmi tout type de céramiques projetables par des techniques plasma, telles que la zircone, l'alumine, l'oxyde de chrome et la cérine.

On utilisera de préférence la zircone stabilisée avec de l'oxyde d'yttrium.

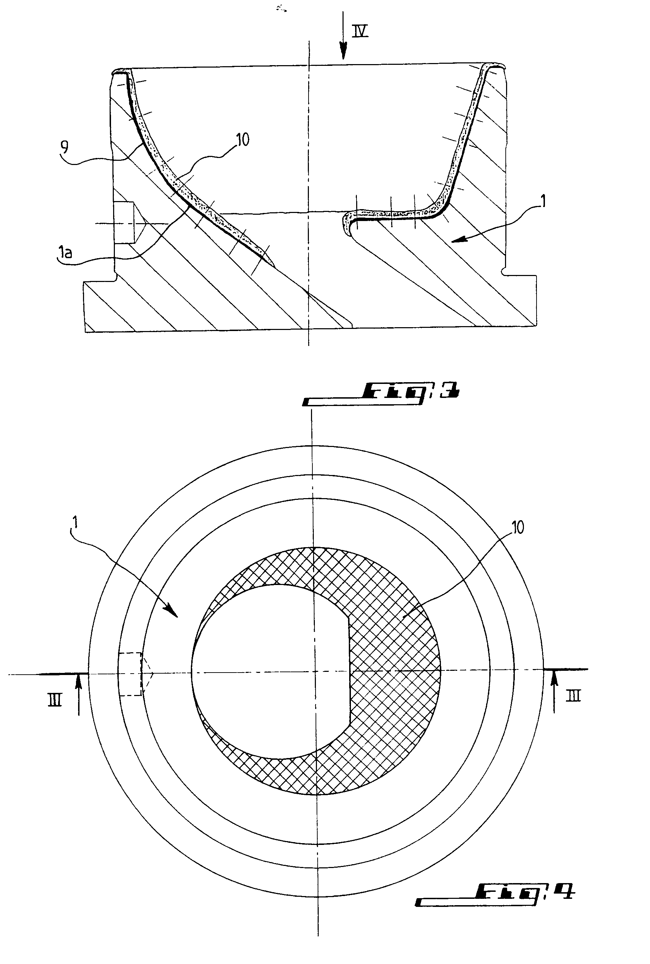

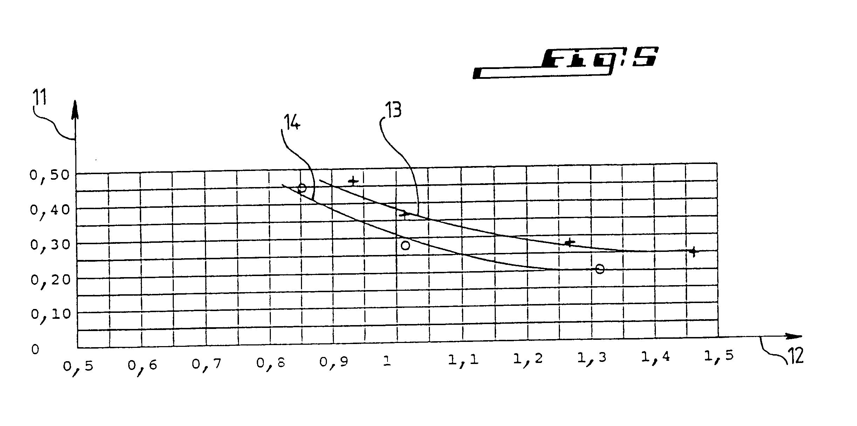

Avant de procéder au dépôt de matériaux céramiques sur la surface 1a de la préchambre de combustion 1, on peut revêtir ladite surface 1a par projection de plasma, d'une sous-couche de composé intermétallique, telle que Ni-Al ou M-Cr-Al-Y où M est un élément métallique approprié, quelconque. Cette sous-couche représentée en 9 sur les figures 2 et 3 permettra d'obtenir un accord dilatométrique entre le dépôt de matière céramique montré en 10, et le matériau de la surface 1a de la préchambre traitée.

Une fois la sous-couche 9 déposée, sur la surface 1a, et le revêtement céramique 10 déposé sur la sous-couche 9, on imprègne le revêtement 10 à l'aide d'un matériau à effet catalytique vis-à-vis de la combustion des hydrocarbures. L'imprégnation du revêtement céramique 10, est réalisée par voie liquide, et cela par échange ionique par substitution cationique ou anionique, au choix, selon le précurseur du matériau catalytique.

Il est important d'observer ici que la porosité ouverte du revêtement céramique 10 est, grâce à la méthode avec torche à plasma décrite ci-dessus, comprise entre environ 5 et 20%, de sorte que le matériau catalytique déposé par voie liquide sera avantageusement reçu dans les pores ouverts du revêtement céramique.

Après l'étape d'imprégnation du matériau céramique, un séchage et un traitement thermique sous atmosphère réductrice permettent de transformer le précurseur du matériau catalytique en produit actif.

D'une manière générale, l'imprégnation de la céramique s'effectue à l'aide d'une solution aqueuse ou alcoolique contenant le ou les précurseurs du matériau catalytique qui peuvent être des sels ou des composés organométalliques du ou des composés précurseurs choisis.

Plusieurs méthodes sont utilisables pour réaliser l'imprégnation selon le type de matériau à effet catalytique utilisé. L'utilisation d'un matériau catalytique, noble pour des catalyses d'oxydation telles que le platine, le palladium, ou des catalyses de réduction telles que le rhodium est permise sur les revêtements céramiques.

La méthode dite "Ipatieff" utilise une solution de titre connu contenant un précurseur du métal noble, tel que l'acide chloroplatinique, qui est imprégné sur le revêtement de céramique. L'évaporation du solvant permet, ensuite d'obtenir une répartition homogène du précurseur en surface et à l'intérieur des pores du matériau céramique.

Ensuite, après séchage, un traitement thermique sous atmosphère réductrice, par exemple de 2 heures à 450°C, sous hydrogène pur pour l'acide chloroplatinique, permet d'activer le catalyseur.

Une autre méthode d'imprégnation dite méthode par échange d'ions, connue pour conduire à une distribution régulière de cristallites métalliques homogènes de dimension moyenne, peut être utilisée. Cette méthode se base sur le caractère amphotère de la zircone dont le point isoélectrique est voisin de 6,7. Un choix convenable du sel précurseur et un contrôle du pH de la solution d'imprégnation permettent de réaliser des réactions d'échanges d'ions à la surface du revêtement céramique.

Cette méthode, comparée à la précédente, met en jeu des réactions chimiques entre le substrat ou surface 1a, et les précurseurs, et permet une répartition plus homogène des produits actifs.

Ainsi, à partir d'un précurseur tel que le chlorure de platine tétramine ($(NH_3)_4PtCl_2$), le chlorure de palladium tétramine ($(NH_3)_4PdCl_2$), le chlorure de rhodium ($RhCl_3$), l'échange pourra se faire par substitution cationique à pH = 6,7 ou bien, à partir d'un précurseur tel que l'acide hexachloroplatinique ($H_2PtCl_6$), l'échange se fera par substitution anionique à pH = 6,7.

Par ailleurs, il est possible d'utiliser un matériau à effet catalytique non noble, tel qu'un mélange d'oxyde à base de sel métallique et/ou de composés organométalliques.

Les sels métalliques peuvent être choisis parmi les nitrates ou les oxychlorures, et les composés organométalliques parmi les acétates ou les acétylacétonates.

L'imprégnation du matériau céramique avec une solution contenant un ou plusieurs de ces sels métalliques, via un traitement thermique de séchage puis une calcination, permet d'obtenir une répartition homogène du matériau catalytique sur son support.

Ainsi, l'oxyde mixte $Cr_2O_3$, $Cu_2O$ (Chromite de cuivre) pour lequel le rapport Cu/Cr=1, donné à titre d'exemple, peut être obtenu par imprégnation selon la méthode dite "Ipatieff" à l'aide d'une solution aqueuse d'un mélange des sels suivants :

$Cu(NO_3)_2$, $3H_2O$ et $Cr(NO_3)_3$, $9H_2O$ dans le rapport massique de 0,603. Tout autre rapport peut être utilisé pour faire varier le rapport Cu/Cr, la valeur 2 est cependant préférable. La charge exprimée en pourcentage massique de (Cu+ Cr) rapportée au substrat de Zircone peut aller jusqu'à 50%, la valeur de 10% étant préférable.

Revenant à la figure 2, on voit un exemple de revêtement catalytique effectué sur une pièce P en acier Z25CNWS 25/13 dont la surface 1a, comporte une sous-couche 9, d'un composé intermétallique (NiAl 95-5) d'épaisseur E = 0,15mm, elle-même revêtue d'un revêtement céramique $ZrO_2$-7% $Y_2O_3$ d'épaisseur E = 0,45 mm.

Ces revêtements comportent des pores bien visibles sur la figure 2, et susceptibles de recevoir un précurseur à l'état liquide qui est par la suite, traité thermiquement de façon à réaliser un matériau catalytique actif, comprenant par exemple du platine incorporé dans les pores de ce revêtement.

Sur la figure 3, on voit un dépôt catalytique, tel que celui représenté sur la figure 2, mais appliqué à la surface interne 1a, de la préchambre de combustion 1, ce dépôt présentant des zones d'épaisseur légèrement variables et matérialisées par des traits perpendiculaires à la surface 1a, les variations d'épaisseur de la sous-couche intermétallique 9 et de la sous-couche en céramique 3 étant dues à la forme complexe de ladite préchambre 1.

Mais pour illustrer le procédé de l'invention, on décrira ci-après un exemple non limitatif de réalisation d'une préchambre de combustion à effet catalytique, selon ce procédé.

Les matériels utilisés, pour réaliser la préchambre étaient les suivants.

Installation connue sous la dénomination Plasmatechnik 80 kW avec un distributeur de poudre connu sous le nom TWIN 10.

Corindonneuse à pression du type connu sous la dénomination 108 P VAPOR BLAST avec corindon qualité DM grade CD, à une pression de 2,5 bars.

Cabine de mouvement pièce-torche "METCO" avec aspiration.

Les produits utilisés étaient :

Pour la sous-couche 9 :

Ni-Al 95-5,

Poudre Stark Berlin

Granulométrie -90,+45 $\mu$m

Pour le dépôt de céramique sur cette sous-couche :

Zircone yttriée ($ZrO_2$ + 7% $Y_2O_3$),

Poudre Stark Berlin

Granulométrie -106,+10 $\mu$m.

Les paramètres de projection sont donnés dans le tableau suivant :

4

| Nature du dépôt | Sous-couche intermétallique NiAl | Dépôt de Zircone $ZrO_2+7\%Y_2O_3$ |
|---|---|---|
| Translation de la torche | 7m/mn | 7 m/mn |
| Intensité | 500 A | 550 A |
| Tension | 60 V | 65 V |
| Angle d'injection de la poudre | 90 degrés | 30 degrés |
| Pression d'éjection des grains infondus | 3 bars | 3 bars |
| Pression de refroidissement (air) | 3 bars | 3 bars |
| Distance de tir | 125 mm | 125 mm |
| Rotation pièce | 200 tr/mn | 200 tr/mn |

Le montage utilisé pour réaliser les tirs est celui représenté schématiquement sur la figure 1.

Les épaisseurs désirées pour la sous-couche 9 de NiAl et pour la couche de zircone 10, étaient respectivement de 0,2 et 0,4 mm, étant entendu que ces épaisseurs s'écartaient quelque peu des valeurs précitées compte tenu de la complexité de la forme de la préchambre 1, comme expliqué précédemment. L'imprégnation du platine sur la couche de zircone 10 a été ensuite effectuée dans les conditions suivantes.

Dégazage de la surface sous vide primaire pendant 4 heures.

Imprégnation par une solution saturée d'acide hexachloroplatinique $H_2PtCl_6$, $6H_2O$.

Evaporation à l'air puis séchage en étuve.

Calcination sous air pendant 2 heures à 400°C.

Réduction sous hydrogène à 400°C pendant 2 heures.

La teneur en platine de chaque préchambre est, dans ces conditions, voisine de 40 mg.

On décrira ci-après les résultats obtenus avec de telles préchambres sur des moteurs diesel à injection directe dans des véhicules automobiles afin de comparer les performances de véhicules équipés ou non d'un tel système de dépollution à la source.

En se reportant à la figure 5, le graphique illustre la concentration en hydrocarbures imbrûlés, en ordonnées 11, en fonction de la concentration en dioxyde d'azote, en abscisses 12. La courbe 13 avec croix, et la courbe 14 avec cercles, représentent, respectivement, des relevés de concentration pour des préchambres standards et des préchambres traitées selon l'invention.

Le cycle de roulage utilisé (cycle américain) se caractérise par des charges partielles importantes associées à de nombreux transitoires. Ces conditions sont particulièrement défavorables du point de vue de l'émission des hydrocarbures imbrûlés et du dioxyde d'azote. Les mesures de concentration ont été effectuées pour plusieurs avances à l'injection. Les teneurs sont exprimées en gramme par longueur de distance parcourue lors du cycle de roulage. L'unité de longueur de distance parcourue est de 1,6 km (un mile).

On constate une réduction importante de l'émission des hydrocarbures pour un taux de dioxyde d'azote donné.

Il faut noter que des essais similaires effectués sur des moteurs équipés de préchambres revêtues, mais non imprégnées, ont également conduit à une baisse de niveau de pollution mais d'une manière plus limitée.

Ces résultats démontrent la synergie obtenue en combinant un dépôt plasma et des matériaux catalytiques, et prouvent l'intérêt de l'invention, qui rend possible une dépollution à la source des moteurs à explosion.

Bien entendu, l'invention n'est nullement limitée aux modes de réalisation décrits et illustrés qui n'ont été donnés qu'à titre d'exemple. C'est ainsi que le procédé de l'invention peut s'appliquer à des pièces autres que la préchambre de combustion d'un moteur à combustion interne, telle que la ou les culasses, les soupapes, les pistons, à l'exclusion de la chemise.

L'invention comprend tous les équivalents techniques des moyens décrits, ainsi que leurs combinaisons, si celles-ci sont effectuées suivant son esprit.

**Revendications**

1. Procédé de réalisation d'un dépôt catalytique dans notamment la chambre de combustion (1) d'un moteur à combustion interne, et du type consistant à déposer dans ladite chambre un revêtement catalytique essentiellement constitué de céramique (10) comportant de l'oxyde de zirconium stabilisé par de l'oxyde d'yttrium et servant de support pour un matériau catalytique actif vis-à-vis de la combustion des hydrocarbures dans ladite chambre de combustion, caractérisé en ce qu'on dépose la céramique (10), à l'aide d'au moins un jet de plasma (3) pour qu'elle forme dans la chambre de combustion (1) un revêtement d'épaisseur égale ou inférieure à 1 mm, et possédant une porosité ouverte comprise entre environ 5 et 20%, et on dépose par voie liquide ledit matériau catalytique de manière que les pores, ouverts dudit revêtement céramique (10) reçoivent ledit matériau catalytique qui est déposé par voie liquide sur le revêtement céramique, le dépôt par voie liquide comportant les étapes d'imprégnation de la céramique (10) par une solution aqueuse ou alcoolique contenant un précurseur du matériau catalytique, et de séchage et de traitement thermique sous atmosphère réductrice pour transformer le précurseur du matériau catalytique en produit actif.

2. Procédé selon la revendication 1, caractérisé en ce qu'avant d'effectuer le dépôt précité de céramique (10), on réalise le dépôt par jet de plasma d'une sous couche de composé intermétallique (9) tel que Ni-Al ou M-Cr-Al-Y pour assurer un accord dilatométrique entre le revêtement céramique (10) et la paroi (1a) de la chambre de combustion (1).

3. Procédé selon l'une des revendications 1 et 2, caractérisé en ce que le précurseur précité rendu actif vis-à-vis de la combustion des hydrocarbures est un matériau noble tel que le platine, le palladium, le rhodium ou analogue, ou un matériau non noble choisi parmi les sels métalliques tels que des nitrates, des oxychlorures, ou des composés organométalliques tels que des acétates, des acétylacétonates, ou analogues.

4. Procédé selon l'une des revendications 1 et 2, caractérisé en ce que le revêtement céramique (10) est réalisé par un dépôt de zircone, d'alumine, d'oxyde de chrome ou de cérine.

5. Procédé selon la revendication 1, 2 ou 4, caractérisé en ce que le revêtement céramique (10) lorsqu'il comporte de la zircone, est stabilisé par 7% d'oxyde d'yttrium.

6. Procédé selon la revendication 1 ou 3, caractérisé en ce que le dépôt du précurseur du matériau catalytique est effectué par échange ionique par substitution cationique ou ionique selon précurseur.

7. Procédé selon l'une des revendications précédentes, caractérisé en ce que l'épaisseur (E1) dudit revêtement céramique (10) est d'environ 0,4 mm et l'épaisseur (E) de la sous couche du composé intermétallique (9) est d'environ 0,2 mm.

8. Procédé selon l'une des revendications précédentes, caractérisé en ce qu'il est applicable à toutes les pièces de la chambre de combustion d'un moteur à combustion interne, tel que notamment la ou les culasses, les soupapes, les pistons, à l'exception de la chemise.

_Fig. 1_

_Fig. 2_

Fig. 3

Fig. 4

Fig.5

EP 0 487 372 A1

Office européen
des brevets

**RAPPORT DE RECHERCHE EUROPEENNE**

Numero de la demande

EP    91 40 2929

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 260 908 (ADIABATICS, INC) <br> * page 5, ligne 17 - page 5, ligne 56; figure 1 * | 1 | F02F7/00 <br> F02B19/16 <br> F02B51/02 |
| A | | 2,4,5,7 | |
| | --- | | |
| Y | DE-A-3 928 480 (VEB BARKAS-WERKE) <br> * le document en entier * | 1 | |
| A | | 3,8 | |
| | --- | | |
| A | PATENT ABSTRACTS OF JAPAN <br> vol. 10, no. 216 (M-502)(2272) 29 Juillet 1992 <br> & JP-A-61 055 314 ( NISSAN MOTOR CO LTD ) 19 Mars 1986 <br> * abrégé * | 1 | |
| | --- | | |
| A | PATENT ABSTRACTS OF JAPAN <br> vol. 9, no. 142 (M-388)(1865) 18 Juin 1985 <br> & JP-A-60 022 075 ( TOYOTA JIDOSHA ) 4 Février 1985 <br> * abrégé * | 1 | |
| | --- | | **DOMAINES TECHNIQUES RECHERCHES (Int. Cl.5)** |
| A | TECHNISCHE RUNDSCHAU <br> vol. 77, no. 41, 1 Octobre 1985, BERN CH <br> pages 9 - 9; 'superplastische keramik' | 1 | F02F <br> F02B |
| | ----- | | |

Le présent rapport a été établi pour toutes les revendications

| Lieu de la recherche | Date d'achèvement de la recherche | Examinateur |
|---|---|---|
| LA HAYE | 04 FEVRIER 1992 | WASSENAAR G.C.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)